(19) **Europäisches Patentamt**

**European Patent Office**

**Office européen des brevets**

(11) Veröffentlichungsnummer: **0 275 055 B1**

(12) ## EUROPÄISCHE PATENTSCHRIFT

(45) Veröffentlichungstag der Patentschrift: **04.11.92**

(21) Anmeldenummer: **88100212.5**

(22) Anmeldetag: **09.01.88**

(51) Int. Cl.⁵: **F16L 47/06**, F16L 21/02

(54) **Kunststoffrohr.**

(30) Priorität: **14.01.87 DE 8700616 U**

(43) Veröffentlichungstag der Anmeldung:
**20.07.88 Patentblatt 88/29**

(45) Bekanntmachung des Hinweises auf die
Patenterteilung:
**04.11.92 Patentblatt 92/45**

(84) Benannte Vertragsstaaten:
**AT BE CH DE FR GB IT LI LU NL**

(56) Entgegenhaltungen:
**DE-A- 3 506 339      DE-B- 1 269 849**
**DE-B- 2 440 886      DE-C- 699 735**
**FR-A- 1 421 264      US-A- 3 784 235**

(73) Patentinhaber: **KWH Pipe GmbH**
**Daimlerstrasse 5-7**
**W-4156 Willich(DE)**

(72) Erfinder: **Jürgenlohmann, Peter**
**Rembrandtweg 13a**
**W-4830 Gütersloh 11(DE)**
Erfinder: **Schröder, Günter**
**Riesebusch 14**
**W-2407 Bad Schwartau(DE)**

(74) Vertreter: **Thielking, Bodo, Dipl.-Ing. et al**
**Patentanwälte Dipl.-Ing. Bodo Thielking**
**Dipl.-Ing. Otto Elbertzhagen Gadderbaumer**
**Strasse 20**
**W-4800 Bielefeld 1(DE)**

**Beschreibung**

Die Erfindung betrifft ein Rohr, daß aus Rohrstücken besteht, die auf einem Stirnende einen im Durchmesser verringerten Einschubbereich und an ihrem anderen Stirnende einen den Einschubbereich des benachbarten Rohrstücks aufnehmenden Muffenbereich aufweisen, welcher außenbündig mit dem benachbarten Bereich des gleichen Rohrstücks liegt, wobei die ineinander eingeschobenen Bereiche einen in eine Aufnahmenut eingelegten umlaufenden, bandartig ausgebildeten Dichtungsring aufweisen, der in Achsrichtung des Kunststoffrohrs nebeneinander angeordnete umlaufende Vorsprünge und jeweils zwischen diesen umlaufende Nuten aufweist.

Bei einem bekannten Rohr dieser Art (DE-A-35 06 339) besitzt der Dichtring zwei Dichtlippen, die sich von innen an die glatten Wände des den Dichtungsring umschließenden Muffenbereich anlegen. Bei dieser bekannten Lösung können die zu einem Rohr zusammengesetzten Rohrstücke leicht nicht nur zusammengeschoben, sondern ebenso leicht auch unbeabsichtigt wieder auseinandergezogen werden.

Es ist ferner eine bandartige Dichtung bekannt (FR-A-1 421 264), welche im Querschnitt etwa V-förmig ausgebildet ist. Auch eine solche Dichtung ist bei dem üblichen Einbau nicht dazu geeignet, ein unbeabsichtigtes Auseinanderziehen von Rohrstücken zu verhindern.

Ausgehend von dem als bekannt vorausgesetzten Stand der Technik liegt der Erfindung die Aufgabe zugrunde, ein Kunststoffrohr so auszubilden, daß einerseits eine dichte Verbindung zwischen den Rohrstücken erzeugt wird und andererseits eine Sicherung gegen ein Ausziehen in Achsrichtung durch die Rohrstücke und die damit zusammenwirkenden Dichtungsbereiche erfolgt.

Die Lösung dieser Aufgabe erfolgt mit den Merkmalen des Kennzeichnungsteils von Anspruch 1.

Bevorzugte Ausgestaltungen der Erfindung sind in den Unteransprüchen beschrieben.

Durch das Vorsehen einer Spreizlippe und einer damit korrespondierenden Aufnahmenut wird sichergestellt, daß die Rohrstücke zur Bildung des Kunststoffrohrs zwar in Einschubrichtung leicht ineinander eingeschoben werden können, daß sie aber nicht mehr unbeabsichtigt in Achsrichtung auseinandergezogen werden können. Gegen ein solches Auseinanderziehen sichern insbesondere die steileren Flanken sowohl der Ringdichtung als auch der Aufnahmenut im Muffenbereich des benachbarten Rohrstücks.

Nachstehend wird eine bevorzugte Ausführungsform der Erfindung anhand der Zeichnung im einzelnen beschrieben. Es zeigen:

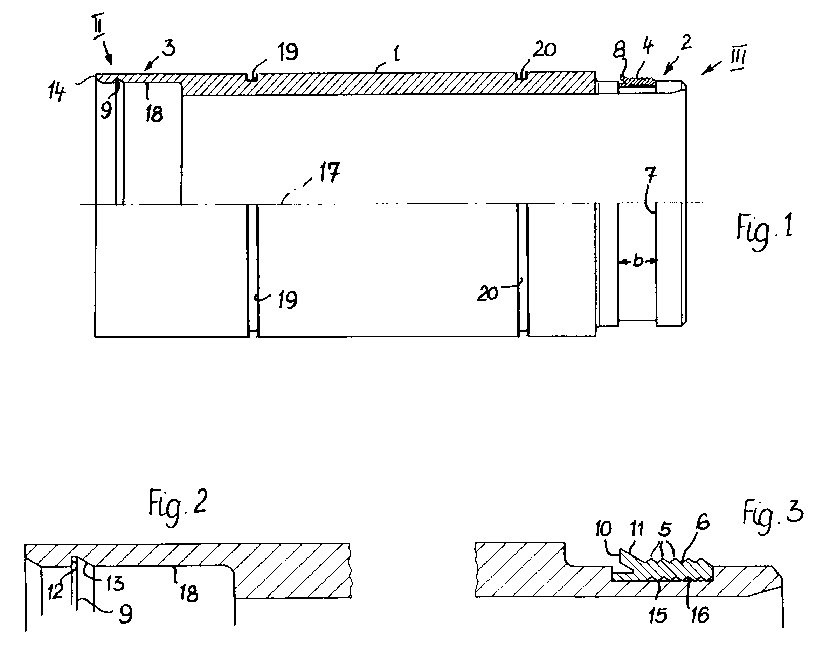

Figur 1 - ein einzelnes Rohrstück, das ein Element des Kunststoffrohrs bildet, in der oberen Hälfte im Längsschnitt und in der unteren Hälfte in einer Seitenansicht,

Figur 2 - eine vergrößerte Darstellung des Muffenbereichs bei II in Figur 1,

Figur 3 - eine vergrößerte Darstellung des Einschubbereichs mit Dichtungsring gemäß III in Figur 1.

Mit 1 ist das gesamte Rohrstück bezeichnet, das einen im Durchmesser abgesetzten Einschubbereich 2 an einer Stirnseite aufweist und am anderen Stirnende 14 einen Muffenbereich 3. Der Muffenbereich 3 entspricht im Durchmesser dem Außendurchmesser des benachbarten mittleren Bereichs des Rohrstücks 1. Der Muffenbereich 3 besitzt einen größeren Innendurchmesser als der sich anschließende benachbarte Innenbereich des mittleren Rohrstücks. Der Innendurchmesser des Muffenbereichs 3 ist so ausgebildet, daß er den abgesetzten Einschubbereich 2 des benachbarten Rohrstücks 1 umschließen kann.

Der Einschubbereich 2, der in der Fachsprache auch als "Spitzende" bezeichnet wird, besitzt eine umlaufende Aufnahmenut 7, in die ein Dichtungsring 4 eingelegt ist. Der Dichtungsring 4 besitzt an seiner Außenseite nebeneinanderliegende Vorsprünge 5 und zwischen den Vorsprüngen angeordneten Nuten 6. Ebenso besitzt der Dichtungsring an seiner Innenseite Vorsprünge 15 und Nuten 16.

Im montierten Zustand liegt der Dichtungsring 4 mit seinen Vorsprüngen 5 an der Innenwand 18 des Muffenbereichs an. Mit den Vorsprüngen 15 drückt der Dichtungsring 4 gegen den Grund der Aufnahmenut 7.

Die Breite b der Aufnahmenut 7 entspricht der Breite des Dichtungsrings 4.

Der Dichtungsring 4 besitzt ferner eine Spreizlippe 8. Diese Spreizlippe 8 tritt in eine Innennut 9 eines benachbarten Muffenbereichs 3 ein.

Die Spreizlippe 8 besitzt eine steilere Flanke 10 und eine weniger steile Flanke 11. Ebenso besitzt die Innennut 9 eine steilere Flanke 12 und eine weniger steile Flanke 13. Im dargestellten Ausführungsbeispiel verlaufen die steileren Flanken 10 und 12 in einer senkrecht zur Achse 17 des Rohrstücks angeordneten Ebene. Die flacher geneigten Flanken 11 und 13 schließen mit dem sich anschließenden Wandbereich einen Winkel von ca. 30 Grad ein.

Die Vorsprünge 5,15 auf dem Außen- und Innenumfang des Dichtungsrings 4 sind in Richtung der Achse 17 versetzt zueinander angeordnet. Auf diese Weise entsteht eine im Querschnitt annähernd wellenförmige Dichtung.

Mit 19 und 20 sind die am Außenumfang des

2

Rohrstücks angeordneten Nuten bezeichnet. Diese Nuten dienen zum Ansatz eines Montagegeräts, welches das Rohrstück 1 formschlüssig ergreifen kann. Das Montagegerät erleichtert das Einziehen oder Einschieben des Rohrstücks in den benachbarten Rohrbereich.

## Patentansprüche

1. Rohr, das aus Rohrstücken besteht, die auf einem Stirnende einen im Durchmesser verringerten Einschubbereich und an ihrem anderen Stirnende einen den Einschubbereich des benachbarten Rohrstücks aufnehmenden Muffenbereich aufweisen, welcher außenbündig mit dem benachbarten Bereich des gleichen Rohrstücks liegt, wobei die ineinander eingeschobenen Bereiche einen in eine Aufnahmenut eingelegten umlaufenden, bandartig ausgebildeten Dichtungsring aufweisen, der in Achsrichtung des Rohrs nebeneinander angeordnete umlaufende Vorsprünge und jeweils zwischen diesen umlaufende Nuten aufweist, dadurch gekennzeichnet, daß die Rohrstücke aus Kunststoff sind, daß der Dichtungsring (4) eine Spreizlippe (8) aufweist und daß der Muffenbereich (3) eine Innennut (9) besitzt, in die die Spreizlippe (8) des umschlossenen Dichtungsrings (4) eingreift.

2. Kunststoffrohr nach Anspruch 2, dadurch gekennzeichnet, daß die beiden Flanken (12 und 13; 10 und 11) der Innennut (9) und der Spreizlippe (8) jeweils unterschiedlich geneigt sind und zumindest die Neigungsrichtungen der miteinander korrespondierenden Flanken (10 und 12; 11 und 13) von Spreizlippe und Innennut (8 und 9) gleich sind.

3. Kunststoffrohr nach Anspruch 2, dadurch gekennzeichnet, daß die Neigungen der miteinander korrespondierenden Flanken (10 und 12; 11 und 13) gleich sind.

4. Kunststoffrohr nach einem oder mehreren der Ansprüche 1 bis 3, dadurch gekennzeichnet, daß die dem Stirnende (14) des Muffenbereichs (3) benachbarte Flanke (12) der Innennut (9) und die zu diesem Stirnende (14) weisende Flanke (10) des Dichtungsrings (4) steiler als die jeweils anderen Flanken (11 und 13) geneigt sind.

5. Kunststoffrohr nach einem oder mehreren der Ansprüche 1 bis 4, dadurch gekennzeichnet, daß die steiler geneigten Flanken (10 und 12) zumindest annähernd senkrecht zur Längsachse (17) angeordnet sind.

## Claims

1. Pipe which is made up of pipe sections which have at one end an insert area of reduced diameter and at the other end a socket area which takes up the insert area of the adjoining pipe section and which lies eternally flush with the adjoining area of the same pipe section wherein the areas which are pushed into each other have a band-like circumferential sealing ring which is placed in a socket groove and which has circumferential projections placed side by side in the axial direction of the pipe wherein circumferential grooves are provided between each projection, characterised in that the pipe sections are made of plastics, that the sealing ring (4) has an expanding lip (8) and that the sleeve area (3) has an inner groove (9) into which the expanding lip (8) of the enclosed sealing ring (4) engages.

2. Plastics pipe according to claim 2 characterised in that the two flanks (12 and 13; 10 and 11) of the inner groove (9) and expanding lip (8) are each inclined differently and at least the incline directions of the corresponding flanks (10 and 12; 11 and 13) of the expanding lip and inner groove (8 and 9) are the same.

3. Plastics pipe according to claim 2 characterised in that the inclines of the flanks (10 and 12; 11 and 13) which correspond with each other are the same.

4. Plastics pipe according to one or more of claims 1 to 3 characterised in that the flank (12) of the inner groove (9) adjoining the end (14) of the socket area (3), and the flank (10) of the sealing ring (4) pointing towards this end (14) are inclined more steeply than each other flank (11 and 13).

5. Plastics pipe according to one or more of claims 1 to 4 characterised in that the more steeply inclined flanks (10 and 12) are set at least approximately at right angles to the longitudinal axis (17).

**Revendications**

l'axe longitudinal (17).

1. Tuyau composé d'éléments tubulaires présentant, a l'une des extrémités frontales, une zone d'in-sertion de diamètre réduit et, à l'autre extrémité frontale, une zone en forme de manchon accueillant la zone d'insertion de l'élément tubulaire précédent, le manchon affleurant, extérieurement, la zone voisine du même élément tubulaire et les zones, insérées l'une dans l'autre, étant équipées d'une bague d'étanchéité en forme de ruban continu, logée dans une rainure de réception, cette bague d'étanchéité étant pourvue, sur la totalité de son pourtour, de saillies, qui, disposées dans le sens axial du tuyau sont séparées par des gorges,
caractérisé par le fait
que les éléments tubulaires sont éxécutés en matière plastique et que la bague d'étanchéité (4) présente une lèvre d'écartement (8) et que la zone en forme de manchon (3) est pourvue d'une rainure interne (9), dans laquelle s'engage la lèvre d'écartement (8) de la bague d'étanchéité (4) cernée.

2. Tuyau en matière plastique selon revendication 1,
caractérisé par le fait
que les deux flancs (12 et 13; 10 et 11) de la rainure interne (9) et de la lèvre d'écartement (8) présentent, respectivement, des pentes différentes et qu'au moins les sens d'oblicité des flancs correspondants respectifs (10 et 12; 11 et 13) de la lèvre d'écartement et de la rainure interne (8 et 9) sont semblables.

3. Tuyau en matière plastique selon revendication 2,
caractérisé par le fait que les pentes des flancs correspondants (10 et 12; 11 et 13) sont égales.

4. Tuyau en matière plastique selon une ou plusieurs revendication 1 à 3,
caractérisé par le fait
que le flanc (12) de la rainure interne (9), voisin de l'extrémité frontale (14) de la zone en forme de manchon (3), et le flanc (10) de la bague d'étanchéité (4), dirigé vers cette extrémité frontale (14), présentent une pente plus forte que les deux autres flancs (11 et 13).

5. Tuyau en matière plastique selon une ou plusieurs revendications 1 à 4,
caractérisé par le fait
que les flancs plus raides (10 et 12) sont, au moins approximativement, perpendiculaires à

Fig. 1

Fig. 2

Fig. 3

EP 0 275 055 B1